# EUROPÄISCHE PATENTSCHRIFT

(11) **EP 3 334 908 B1**
(45) Veröffentlichungstag und Bekanntmachung des Hinweises auf die Patenterteilung: **16.10.2019**
(21) Anmeldenummer: 16744788.7
(22) Anmeldetag: 29.07.2016
(51) Int. Cl.: F01L 1/047

(54) **VERFAHREN UND VORRICHTUNG ZUR MONTAGE EINER VERSTELLBAREN NOCKENWELLE**
METHOD AND DEVICE FOR ASSEMBLING AN ADJUSTABLE CAMSHAFT
PROCÉDÉ ET APPAREIL POUR LE MONTAGE D'UN ARBRE À CAMES RÉGLABLE

(30) Priorität: 11.08.2015 DE 102015215292
(43) Veröffentlichungstag der Anmeldung: 20.06.2018
(73) Patentinhaber: ThyssenKrupp Presta TecCenter AG, 9492 Eschen (LI); thyssenkrupp AG, 45143 Essen (DE)
(72) Erfinder: SCHLEMMER, Reinhard, 6845 Hohenems (AT); CURLIC, Marko, 9486 Schaanwald (LI); PFITSCHER, Aaron, 6713 Ludesch (AT)
(74) Vertreter: thyssenkrupp Intellectual Property GmbH
(86) Internationale Anmeldenummer: PCT/EP2016/068161
(87) Internationale Veröffentlichungsnummer: WO 2017/025357

(56) Entgegenhaltungen:
- WO-A1-2006/081788
- DE-A1-102013 211 159
- DE-A1-102013 211 161
- DE-A1-102013 216 567
- GB-A- 2 375 583

## Beschreibung

Die vorliegende Erfindung betrifft ein Verfahren sowie eine Vorrichtung zur Montage einer verstellbaren Nockenwelle, welche zumindest ein Wellensegment aufweisend eine Außenwelle und eine sich konzentrisch durch eine Durchgangsbohrung der Außenwelle erstreckende Innenwelle aufweist.

Eine verstellbare Nockenwelle ist beispielsweise aus der DE 20 2005 021 715 U1 bekannt. Die verstellbare Nockenwelle für den Ventiltrieb einer Brennkraftmaschine weist eine Außenwelle auf, auf welcher sich mit dieser Außenwelle verdrehfest angeordnete erste Nocken befinden, und wobei sich durch die Außenwelle eine Innenwelle erstreckt mit der zweite Nocken verdrehfest verbunden sind. Die zweiten Nocken sind außenseitig auf der Außenwelle gelagert. Sobald die Innenwelle hinsichtlich ihrer Phasenlage relativ zu der Außenwelle verdreht wird, verlagert sich die Steuerposition der ersten Nocken gegenüber der Steuerposition der zweiten Nocken. Die Änderung der Phasenlage der Innenwelle relativ zu der Phasenlage der Außenwelle wird mittels einer Nockenverstelleinrichtung realisiert, welche an der Nockenwelle angeordnet und mit einem Drucköl aktivierbar ist.

Auch aus der DE 10 2013 211 161 A1 ist ein Verfahren zur Montage einer verstellbaren Nockenwelle bekannt geworden. Im Wesentlichen wird hier ein Verfahren zur Montage eines Nockens auf einer verstellbaren Nockenwelle beschreiben, bei dem ein Verbindungsstift entgegen einem Ausrichtstift durch eine Durchgangsöffnung und eine Bohrung eingeschoben wird, dabei den Ausrichtstift herausschiebt und den ersten Nocken drehfest mit der Innenwelle verbindet, wobei der Verbindungsstift bei montierter Nockenwelle ein Übermaß bezüglich der Durchgangsöffnung und der Bohrung besitzt.

Insbesondere bei der Montage einer entsprechenden verstellbaren Nockenwelle besteht die Schwierigkeit die verstellbare Innenwelle konzentrisch in der Durchgangsbohrung der Außenwelle anzuordnen und insbesondere in der Art anzuordnen und zu befestigen, dass das maximal vorhandene Spiel zwischen den beiden Komponenten, nämlich der Innenwelle und der Außenwelle radial gleich groß ist. Insbesondere bei einer exzentrischen Anordnung der Innenwelle innerhalb der Außenwelle kann dies zu Reibungen zwischen der äußeren Oberfläche der Innenwelle und der Durchgangsbohrungsoberfläche der Außenwelle führen, wobei auch eine reibungsfreie und damit prozesssichere Drehung bzw. Verstellung der Innenwelle um deren zentrische Längsachse nicht gewährleistet werden kann.

Es ist daher die Aufgabe der vorliegenden Erfindung, die voranstehend beschriebenen Nachteile bei einem Verfahren sowie einer Vorrichtung zur Montage einer verstellbaren Nockenwelle zumindest teilweise zu beheben. Insbesondere ist es die Aufgabe der vorliegenden Erfindung ein Verfahren sowie eine Vorrichtung zur Montage einer verstellbaren Nockenwelle zu schaffen, die auf eine einfache und kostengünstige Art und Weise eine konzentrische bzw. zentrische Anordnung der Innenwelle innerhalb der Außenwelle ermöglichen, sodass eine Verklemmung bzw. ein die Reibung erhöhendes Anliegen zwischen der Innenwelle und der Außenwelle, insbesondere während der Verstellung der Nockenwelle im Betrieb, vorteilhaft vermieden wird.

Die voranstehende Aufgabe wird gelöst durch ein Verfahren zur Montage einer verstellbaren Nockenwelle mit den Merkmalen gemäß Anspruch 1 sowie durch eine Vorrichtung zur Montage einer verstellbaren Nockenwelle mit den Merkmalen gemäß Anspruch 11. Weitere Merkmale und Details der Erfindung ergeben sich aus den Unteransprüchen, der Beschreibung und den Zeichnungen. Dabei gelten Merkmale und Details, die im Zusammenhang mit dem Verfahren beschrieben sind selbstverständlich auch im Zusammenhang mit der erfindungsgemäßen Vorrichtung und umgekehrt, sodass bezüglich der Offenbarung zu den einzelnen Erfindungsaspekten stets wechselseitig Bezug genommen wird bzw. werden kann. Außerdem kann das erfindungsgemäße Verfahren mit der erfindungsgemäßen Vorrichtung durchgeführt werden.

Das Verfahren zur Montage einer verstellbaren Nockenwelle, welche zumindest ein Wellensegment aufweisend eine Außenwelle und eine sich konzentrisch durch eine Durchgangsbohrung der Außenwelle erstreckende Innenwelle aufweist, weist wenigstens die folgenden Schritte auf:
- Vorpositionieren der Innenwelle, wobei die Innenwelle zumindest abschnittsweise exzentrisch in die Durchgangsbohrung der Außenwelle eingebracht wird,
- Einschieben eines Positionierelementes in einer Einschubrichtung durch eine erste in einer Umfangswandung der Außenwelle gebildeten Außenwellenbohrung, eine sich orthogonal zur Längsachse der Innenwelle erstreckende Innenwellenbohrung und eine zweite in eine Umfangswandung der Außenwelle gebildeten Außenwellenbohrung derart, dass das Positionierelement aus der zweiten Außenwellenbohrung hinausragt,
- Endpositionieren der Innenwelle, wobei das Positionierelement derart entgegen der Einschubrichtung bewegt wird, dass die Innenwelle sich konzentrisch innerhalb der Durchgangsbohrung der Außenwelle ausrichtet. Die verstellbare Nockenwelle weist neben dem Wellensegment vorteilhaft auch wenigstens ein Nockensegment mit zumindest einer Nockenbahn, vorteilhaft auch 2 Nockenbahnen auf. Das Nockensegment ist beispielsweise auf der Außenwelle aufgepresst, sodass sich die Außenwelle durch eine entsprechende Durchgangsbohrung des Nockensegmentes hindurch erstreckt. Es ist jedoch auch denkbar, dass das Nockensegment drehbar auf der Außenwelle angeordnet und drehfest mit der Innenwelle verbunden ist. Hierbei erstreckt sich beispielsweise ein Verbindungselement zwischen der Innenwelle und dem Nockensegment durch eine entsprechende Außenwellenbohrung hindurch. Es ist zudem auch denkbar, dass die verstellbare Nockenwelle wenigstens zwei Nockensegmente, insbesondere ein verdrehfest mit der Außenwelle verbundenes Nockensegment sowie ein verdrehfest mit der Innenwelle und verdrehbar auf der Außenwelle gelagertes Nockensegment aufweist.

Die Außenwelle ist vorteilhaft eine Hohlwelle, durch welche sich die Innenwelle, welche vorteilhaft eine Vollwelle ist, hindurch erstreckt. Nach der Montage der verstellbaren Nockenwelle ist die Innenwelle erfindungsgemäß konzentrisch innerhalb der Außenwelle angeordnet. Das bedeutet, dass die Außenwelle sowie die Innenwelle eine gemeinsame zentrische Drehachse (Längsachse) aufweisen. Bei der Vorpositionierung der Innenwelle innerhalb der Durchgangsbohrung der Außenwelle wird die Innenwelle in diese Durchgangsbohrung hineingeschoben und insbesondere unter Ausnutzung der Gravitation derart innerhalb der Durchgangsbohrung der Außenwelle abgelegt, dass die Innenwelle zumindest abschnittsweise eine innere Oberfläche der Außenwelle, insbesondere eine Oberfläche der Durchgangsbohrung der Außenwelle kontaktiert. Die Innenwelle ist folglich exzentrisch zur Außenwelle innerhalb der Durchgangsbohrung der Außenwelle eingebracht. Um folglich die Innenwelle konzentrisch zur Außenwelle anzuordnen, wird ein Positionierelement in Einschubrichtung in das Wellensegment hineingeschoben. Das Positionierelement ist vorteilhaft ein Stiftelement, welches beispielsweise durch eine erste in einer Umfangswandung der Außenwelle gebildeten Außenwellenbohrung eingebracht ist und weiter in eine Innenwellenbohrung der Innenwelle eingeschoben und vorteilhaft durch eine zweite in der Umfangswandung der Außenwelle gebildeten Außenwellenbohrung wieder, zumindest ein Stück, aus dem Wellensegment hinausgeschoben wird. Vorteilhafter Weise ragt das Positionierelement aus der zweiten Außenwellenbohrung und folglich damit in diesem Bereich aus dem Wellensegment heraus. Das bedeutet, dass das Positionierelement aus dem Wellensegment an derjenigen Seite hinausragt, welche der Seite des Wellensegmentes gegenüber liegt, an welcher das Positionierelement in das Wellensegment eingebracht wurde. Demzufolge ist im Rahmen der Erfindung unter der ersten Bohrung (Außenwellenbohrung oder eventuell auch Fixierelementbohrung) diejenige Bohrung verstanden, in welche das Positionierelement in das Wellensegment eingeschoben wird.

Vorteilhaft sind die in der Umfangswandung der Außenwelle eingebrachten bzw. gebildeten Außenwellenbohrungen fluchtend zueinander ausgebildet. Nach dem Einschieben des Positionierelementes erfolgt vorteilhaft die Endpositionierung der Innenwelle. Hierbei wird das Positionierelement folglich derart entgegen der Einschubrichtung bewegt, dass das Positionierelement vorteilhaft durch die Außenwellenbohrung der Außenwelle gleitet (Gleitreibung). Demgegenüber besteht jedoch eine Haftreibung zwischen dem Positionierelement und der Innenwelle in der Art, dass die Innenwelle entgegen der Einschubrichtung bewegt wird. Demzufolge wird die Innenwelle von der Wandung der Durchgangsbohrung der Außenwelle abgehoben und zentrisch bzw. konzentrisch innerhalb der Durchgangsbohrung der Außenwelle positioniert. Das bedeutet, dass die Innenwelle bei einem Zurückschieben des Positionierelementes mit diesem Positionierelement mitgenommen und folglich entgegen der Einschubrichtung bewegt wird. Dies wird bedingt durch eine entsprechende Haftreibungskraft, welche zwischen der Innenwelle, insbesondere der Innenwellenbohrungsoberfläche und dem Positionierelement, insbesondere der äußeren Oberfläche des Positionierelementes besteht, und welche höher ist als die Gleitreibungskraft, welche zwischen der Außenwelle, insbesondere der Außenwellenbohrungsoberfläche und dem Positionierelement, insbesondere der äußeren Oberfläche des Positionierelementes besteht.

Im Rahmen der Erfindung ist es denkbar, dass das Positionierelement wenigstens um die Größe eines halben maximal möglichen Spiels in Einschubrichtung zumindest aus dem Wellensegment hinausgeschoben wird. Das mögliche Spiel besteht zwischen der äußeren Oberfläche der Innenwelle und der Oberfläche der Durchgangsbohrung der Außenwelle. Vorteilhaft entsteht das maximal mögliche Spiel bei freier Bewegung der Innenwelle in radialer Richtung innerhalb der Durchgangsbohrung. Bei einer konzentrischen Anordnung der Innenwelle innerhalb der Durchgangsbohrung der Außenwelle steht in radialer Richtung betrachtet zwischen der äußeren Oberfläche der Innenwelle und der Oberfläche der Durchgangsbohrung der Außenwelle ein halbes maximal mögliches Spiel zur Verfügung.

Demzufolge ist es vorteilhaft denkbar, dass das Positionierelement um weniger als die Größe des halben maximal möglichen Spiels, um mehr als die Größe des halben maximal möglichen Spiels oder um genau die Größe des halben maximal möglichen Spiels entgegen der Einschubrichtung zumindest in das Wellensegment hinein bewegt wird. Vorteilhaft wird die Innenwelle derart weit entgegen der Einschubrichtung mit dem Positionierelement gemeinsam bewegt, dass eine konzentrische Anordnung der Innenwelle innerhalb der Durchgangsbohrung der Außenwelle stattfindet. Nach einem Zurückbewegen bzw. Zurückschieben des Positionierelementes entgegen der Einschubrichtung steht dieses vorteilhaft aus dem Wellensegment nicht mehr hervor. Es ist jedoch auch denkbar, dass das Positionierelement um mehr als die Größe des halben maximal möglichen Spieles in Einschubrichtung zumindest aus dem Wellensegment hinausgeschoben und genau um die Größe des halben maximal möglichen Spiels entgegen der Einschubrichtung zumindest in das Wellensegment hinein bewegt wird. Oder, dass das Positionierelement um genau die Größe das halben maximal möglichen Spiels in Einschubrichtung zumindest aus dem Wellensegment ausgeschoben und um weniger als das halbe maximal mögliche Spiel entgegen der Einschubrichtung zumindest in das Wellensegment hinein bewegt wird. In diesen Fällen ist es möglich, dass das Positionierelement noch aus dem Wellensegment, insbesondere auf der Seite, welche der Einschubseite gegenüberliegt - zumindest abschnittsweise - hervorsteht. Ebenfalls ist es möglich, dass das Positionierelement um beispielsweise genau die Größe des halben maximal möglichen Spieles in Einschubrichtung zumindest aus dem Wellensegment hinausgeschoben und um mehr als die Größe des halben maximal möglichen Spiels entgegen der Einschubrichtung zumindest in das Wellensegment hinein bewegt wird. Dann ist es möglich, dass das Positionierelement noch aus dem Wellensegment, insbesondere Einschubseite - zumindest abschnittsweise - hervorsteht. Die Größe des Einschiebens und Zurückschiebens des Positionierelementes ist vorteilhaft in Berücksichtigung der zu positionierenden Innenwelle und der Reibungskräfte zwischen dem Positionierelement und der Innenwellenbohrungsoberfläche zu variieren. So ist es denkbar, dass aufgrund eines Gleitens zwischen der Oberfläche der Innenwellenbohrung und des Positionierelementes ein weiteres Zurückschieben - als Einschieben - des Positionierelementes erforderlich ist. Vorteilhaft erfolgt jedoch ein Einschieben des Positionierelementes um (genau) die Größe des halben maximal möglichen Spiels in und entgegen der Einschubrichtung zur Bewegung des Positionierelementes aus dem Wellensegment hinaus und in das Wellensegment hinein. Eine zusätzliche Überwachung hinsichtlich der korrekten zentrischen Anordnung der Innenwelle in der Außenwelle entfällt damit vorteilhaft.

Es ist des Weiteren denkbar, dass ein Ausrichtungselement vor dem Einschieben des Positionierelementes in der Einschubrichtung zumindest durch die erste Außenwellenbohrung und die Innenwellenbohrung wenigstens zur Ausrichtung der ersten Außenwellenbohrung zur Innenwellenbohrung eingeschoben wird. Vorteilhaft ist das Ausrichtungselement stiftförmig bzw. stabförmig ausgestaltet. Das Ausrichtungselement dient vorteilhaft zum Ausrichten der Innenwelle zur Außenwelle derart, dass die Innenwellenbohrung fluchtend zu wenigstens einer Außenwellenbohrung angeordnet ist. Dies erleichtert vorteilhaft ein Einbringen des Ausrichtungselementes in das Wellensegment.

Es ist des Weiteren möglich, dass das Ausrichtungselement zudem zumindest teilweise in die zweite Außenwellenbohrung eingeschoben wird. Demzufolge wird das Ausrichtungselement vorteilhaft vollständig durch das Wellensegment geschoben bzw. in das Wellensegment hineingeschoben wodurch wiederum die Ausrichtung der Innenwelle zur Außenwelle optimiert wird.

Es ist zudem denkbar, dass ein Ausrichtungselement vor dem Einschieben des Positionierelementes entgegen der Einschubrichtung zumindest durch die zweite Außenwellenbohrung und die Innenwellenbohrung wenigstens zur Ausrichtung der zweiten Außenwellenbohrung zur Innenwellenbohrung eingeschoben wird. Im Gegensatz zu der zuvor genannten Alternative wird hierbei das Ausrichtungselement entgegen der Einschubrichtung in das Wellensegment eingebracht, wobei die Einschubrichtung im Wesentlichen der Richtung entspricht, in welcher das Positionierelement in das Wellensegment eingeschoben wird. Demzufolge ist es denkbar, dass das Ausrichtungselement und das Positionierelement in gleicher Richtung in das Wellensegment oder auch in zueinander entgegengesetzten Richtungen in das Wellensegment einbringbar sind. Das Einbringen des Ausrichtungselementes entgegen der Einschubrichtung ist vorteilhaft möglich sofern das Werkzeug zur Montage der verstellbaren Nockenwelle dies ermöglicht. Hierbei ist es beispielsweise erforderlich, dass das Wellensegment von zwei einander gegenüberliegenden Seiten angreifbar ist.

Zu vorgenanntem Einbringen des Ausrichtungselementes entgegen der Einschubrichtung, ist es zudem denkbar, dass das Ausrichtungselement zudem zumindest teilweise in die erste Außenwellenbohrung eingeschoben wird. Auch in diesem Fall ist es demzufolge möglich, dass das Ausrichtungselement nicht lediglich teilweise, sondern vorteilhaft vollständig in das Wellensegment eingeschoben wird.

Des Weiteren ist es denkbar, dass das Ausrichtungselement entgegen der Einschubrichtung aus dem Wellensegment bewegt wird. Es ist zudem auch möglich, dass das Ausrichtungselement in Einschubrichtung aus dem Wellensegment bewegt wird. Die zuvor genannten Variationen des Einbringens und Herausschiebens des Ausrichtungselementes ermöglichen folglich, dass das Ausrichtungselement in gleicher Richtung wie das Positionierelement in das Wellensegment eingebracht, durch das Wellensegment geführt und an der gegenüberliegenden Seite aus dem Wellensegment hinaus bewegt wird. Es ist zudem auch denkbar, dass das Ausrichtungselement an gleicher Seite wie das Positionierelement in das Wellensegment eingebracht, durch das Wellensegment durchgeführt und wieder derart zurückgeführt wird bzw. wieder derart herausgezogen wird, dass das Ausrichtungselement entgegen der Einschubrichtung aus dem Wellensegment heraus gezogen wird. Es ist zudem auch denkbar, dass das Ausrichtungselement in entgegengesetzter Richtung zudem Positionierelement, nämlich entgegen der Einschubrichtung in das Wellensegment eingebracht, durch das Wellensegment durchgeführt und an gegenüberliegende Seite aus dem Wellensegment hinaus bewegt oder an gleicher Seite hinaus bewegt wird, zu der es in das Wellensegment eingebracht wurde.

Im Rahmen der Erfindung ist es des Weiteren denkbar, dass ein Fixierelement derart an der Außenwelle angeordnet wird, dass zumindest eine sich durch eine Umfangswandung des Fixierelementes erstreckende Fixierelementbohrung fluchtend zu wenigstens einer Außenwellenbohrung angeordnet wird. Vorteilhaft ist das Fixierelement rohrförmig bzw. hülsenförmigen ausgestaltet und wird folglich auf die Außenwelle aufgeschoben. Vorteilhaft weist das Fixierelement zwei Fixierelementbohrungen auf, welche fluchtend zueinander ausgestaltet sind. Es ist des Weiteren denkbar, dass die Außenwellenbohrung bzw. mindestens eine der Außenwellenbohrungen derart größer dimensioniert ist, dass die Positionierung bzw. Zentrierung der Innenwelle innerhalb der Außenwelle mittels des Fixierelementes und nicht mittels der Außenwelle ermöglicht wird. Hierfür ist es denkbar, dass die Außenwellenbohrung zum Beispiel in Gestalt einer Langlochbohrung ausgestaltet sind, durch welche sich das Positionierelement hindurch erstreckt. Vorteilhaft weist demnach das Fixierelement Fixierelementbohrungen auf, welche folglich die Positionierung der Innenwelle mittels des Positionierelementes ermöglichen. Das das bedeutet, dass zwischen der Oberfläche der Fixierelementbohrung und der Oberfläche des Positionierelementes eine Haftreibungskraft besteht, dessen Losbrechmoment geringer ist, als bei der Haftreibungskraft, welche zwischen der Innenwelle bzw. der Innenwellenbohrung und der Oberfläche des Positionierelementes besteht. Hierdurch wird vorteilhaft eine Bewegung des Positionierelementes durch die Fixierelementbohrungen zur Mitnahme der Innenwelle sowie deren konzentrischer Anordnung innerhalb der Außenwelle ermöglicht. Das Fixierelement ist vorteilhaft ein Nockensegment bzw. ein Nockenelement wie beispielsweise ein Bundnockensegment, aufweisend wenigstens eine Nockenbahn vorteilhaft auch zwei oder mehr Nockenbahnen. Es ist des Weiteren denkbar, dass das Fixierelement ein Verschiebeelement aufweisend eine Führungsnut zur Führung eines Aktuatorpins ist. Vorteilhaft steht das Positionierelement zumindest auf einer Seite derart weit aus der Außenwelle hervor, dass eine Verbindung des Positionierelementes mit dem Fixierelement ermöglicht wird. Das bedeutet es ist denkbar, dass das Positionierelement zumindest auf der Einschubseite, vorteilhaft auf der Einschubseite und der der Einschubseite gegenüberliegenden Seite aus der Außenwelle hervorsteht. Je nachdem, wie weit das Positionierelement in Einschubrichtung durch die Außenwelle und vorteilhaft auch durch das Fixierelement hindurch bzw. ausgeschoben wurde, ist es denkbar, dass beim Zurückschieben des Positionierelementes zur Ausrichtung der Innenwelle das Positionierelement zumindest auf einer Seite des Fixierelementes hervorsteht, insbesondere auf der Einschubseite hervorsteht oder auf der der Einschubseite gegenüberliegenden Seite. Auch ist es denkbar, dass das Positionierelement mit dem Fixierelement, insbesondere der äußeren Oberfläche des Fixierelementes derart abschließt, dass es aus dem Fixierelement nicht hervorsteht.

Die Vorrichtung zur Montage einer verstellbaren Nockenwelle aufweisend zumindest ein Wellensegment, wobei das Wellensegment eine Außenwelle und eine sich konzentrisch durch eine Durchgangsbohrung der Außenwelle erstreckende Innenwelle aufweist, weist wenigstens ein erstes Anordnungssegment zur Positionierung der Innenwelle innerhalb der Durchgangsbohrung der Außenwelle derart, dass die Innenwelle exzentrisch zur Außenwelle angeordnetes ist, und ein zweites Anordnungssegment zur Positionierung der Innenwelle innerhalb der Durchgangsbohrung der Außenwelle derart, dass die Innenwelle konzentrisch zur Außenwelle angeordnet ist, auf. Das erste Anordnungssegment und das zweite Anordnungssegment weisen erfindungsgemäß zumindest ein Haltemittel auf, welches zumindest die Außenwelle oder ein auf der Außenwelle anordenbares Fixierelement positioniert. Erfindungsgemäß weist das erste Anordnungssegment eine Aussparung zur Aufnahme eines aus dem Wellensegment herausragenden Abschnittes eines Positionierelementes, welches zumindest abschnittsweise durch das Wellensegment hindurchgeschoben ist, auf. Das zweite Anordnungssegment weist erfindungsgemäß ein Kontaktierungsmittel zum Einschieben des Positionierelementes, vorteilhaft mindestens um die Länge des herausragenden Abschnittes, zumindest in das Wellensegment hinein auf. Es ist jedoch auch denkbar, dass das Positionierelement um weniger als die Länge des herausragenden Anschnittes in das Wellensegment hineingeschoben wird. Folglich steht das Positionierelement auf der Seite, welcher der Einschubseite des Wellensegmentes gegenüberliegt, zumindest teilweise aus dem Wellensegment hervor. Es ist ebenfalls denkbar, dass das Positionierelement weiter als um die Länge des herausragenden Anschnittes in das Wellensegment hineingeschoben wird. Daraufhin ist es möglich, dass das Positionierelement auf der Einschubseite aus dem Wellensegment hervorsteht. Die Haltemittel sind vorteilhaft Ausnehmungen, welche derart ausgestaltet bzw. geometrisch geformt sind, dass diese die Nockenwelle zumindest teilumfänglich aufnehmen können. Als Haltemittel finden vorteilhaft auch Vorsprünge oder Haltenasen oder vergleichbare Mittel Anwendung.

Bei der beschriebenen Vorrichtung ergeben sich sämtliche Vorteile, die bereits zu einem Verfahren zur Montage einer verstellbaren Nockenwelle gemäß dem ersten Aspekt der Erfindung beschrieben worden sind.

Das erfindungsgemäße Verfahren sowie die erfindungsgemäße Vorrichtung zur Montage einer verstellbaren Nockenwelle werden nachfolgend anhand von Zeichnungen näher erläutert. Es zeigen jeweils schematisch:
- Figur 1: in einer Querschnittsdarstellung eine Ausführungsform einer verstellbaren Nockenwelle angeordnet in einer Ausführungsform einer Vorrichtung zur Montage der verstellbaren Nockenwelle beim Montageschritt des Vorpositionierens der Innenwelle innerhalb der Durchgangsbohrung der Außenwelle,
- Figur 2: in einer Querschnittsansicht die in der Figur 1 gezeigte Ausführungsform einer verstellbaren Nockenwelle beim Einführen eines Ausrichtungselementes,
- Figur 3: in einer Querschnittsdarstellung die in den Figuren 1 und 2 gezeigte Ausführungsform einer verstellbaren Nockenwelle während des Einbringens eines Positionierelementes,
- Figur 4: in einer Querschnittsdarstellung die in den Figuren 1 bis 3 gezeigte Ausführungsform einer verstellbaren Nockenwelle während des Endpositionierens der Innenwelle relativ zur Außenwelle,
- Figur 5: die in den Figuren 1 bis 4 gezeigte Ausführungsform einer verstellbaren Nockenwelle nach erfolgter Montage gemäß dem erfindungsgemäßen Verfahren,
- Figur 6: in einer seitlichen Schnittdarstellung ein Ausschnitt einer weiteren Ausführungsform einer verstellbaren Nockenwelle mit einem entgegen der Einschubrichtung eingebrachten Ausrichtungselement,
- Figur 7: in einer seitlichen Schnittdarstellung ein Ausschnitt der in der Figur 6 gezeigten Ausführungsform einer verstellbaren Nockenwelle mit einem in Einschubrichtung eingebrachtem Ausrichtungselement,
- Figur 8: in einer seitlichen Schnittdarstellung ein Ausschnitt der in den Figuren 6 und 7 gezeigten Ausführungsform einer verstellbaren Nockenwelle mit in Einschubrichtung eingeschobenem Positionierelement,
- Figur 9: in einer seitlichen Schnittdarstellung ein Ausschnitt der in den Figuren 6 bis 8 gezeigten Ausführungsform einer verstellbaren Nockenwelle mit einer endpositionierten Innenwelle,
- Figur 10: in einer seitlichen Schnittdarstellung ein Ausschnitt einer weiteren Ausführungsform einer verstellbaren Nockenwelle mit in Einschubrichtung eingebrachtem Ausrichtungselement,
- Figur 11: in einer seitlichen Schnittdarstellung ein Ausschnitt der in der Figur 10 gezeigten Ausführungsform einer verstellbaren Nockenwelle mit in Einschubrichtung eingebrachtem Positionierelement, und
- Figur 12: in einer seitlichen Schnittdarstellung ein Ausschnitt der in den Figuren 10 und 11 gezeigten Ausführungsform einer verstellbaren Nockenwelle mit endpositionierter Innenwelle.

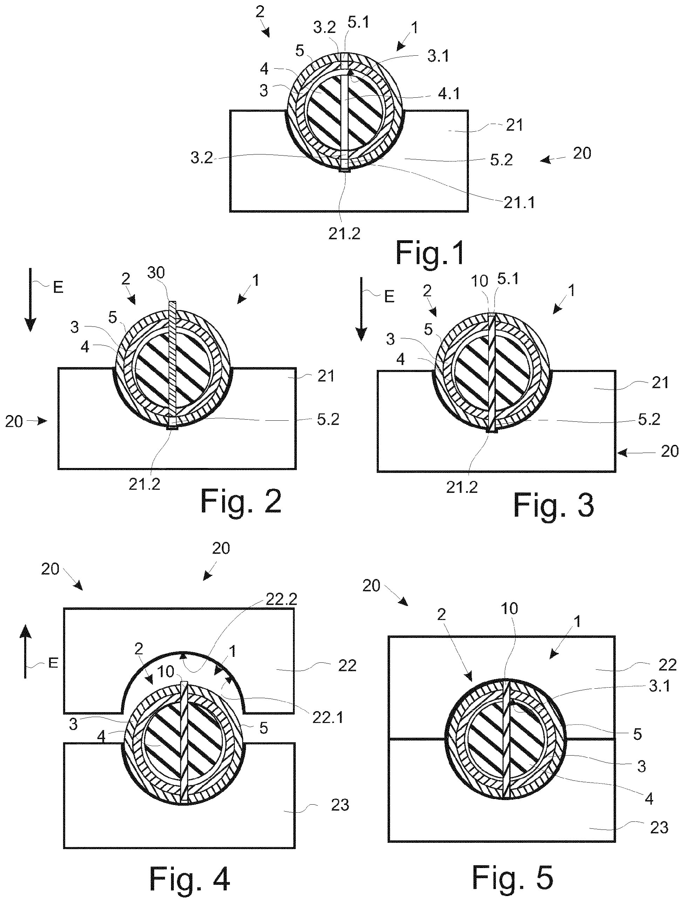

Elemente mit gleicher Funktion und Wirkungsweise sind in den Figuren 1 bis 12 jeweils mit denselben Bezugszeichen versehen.

In der Figur 1 ist in einer Querschnittdarstellung eine Ausführungsform einer verstellbaren Nockenwelle 1, aufweisend eine Außenwelle 3 sowie eine sich durch die Durchgangsbohrung 3.1 der Außenwelle 3 hindurch erstreckende Innenwelle 4, gezeigt. Die Innenwelle 4 ist exzentrisch zur Außenwelle 3, insbesondere innerhalb deren Durchgangsbohrung 3.1 angeordnet. Die Innenwelle 4 weist eine Innenwellenbohrung 4.1 auf. Die Außenwelle 3 weist eine erste Außenwellenbohrung 3.2 sowie eine zweite Außenwellenbohrung 3.3 auf. Die in der Figur 1 gezeigte Ausführungsform der verstellbaren Nockenwelle 1 weist zudem eine Fixierelement 5 auf. Das Fixierelement 5 ist vorteilhaft ringförmig, insbesondere hülsenförmig ausgestaltet. Die Außenwelle 3 sowie die Innenwelle 4 erstrecken sich durch das Fixierelement 5, insbesondere durch eine Durchgangsbohrung des Fixierelementes 5 hindurch. Vorteilhaft weisen nach erfolgter Endmontage das Fixierelement 5, die Außenwelle 3 sowie die Innenwelle 4 eine gemeinsame zentrische Längsachse auf, wie insbesondere in der nachfolgend beschriebenen Figur 5 gezeigt. Das Wellensegment 2 umfasst vorteilhaft die Außenwelle 3 sowie die Innenwelle 4. Das Wellensegment 2 bzw. die Nockenwelle 1 ist in einer Vorrichtung 20 zur Montage einer Nockenwelle 1, welche im nachfolgenden auch als Werkzeug 20 bezeichnet werden kann, angeordnet.

Die in der Figur 1 gezeigte Ausführungsform einer Vorrichtung 20 zur Montage einer verstellbaren Nockenwelle 1 weist ein erstes Anordnungssegment 21 auf. Das erste Anordnungssegment 21 weist ein Haltemittel 21.1 sowie eine Aussparung 21.2 auf. Das Haltemittel 21.1 ist gemäß der in der Figur 1 gezeigten Ausführungsform in Gestalt einer Ausnehmung gebildet und entspricht der geometrischen Form der Nockenwelle 1, sodass die Nockenwelle 1, oder insbesondere das Fixierelement 5 zumindest teilumfänglich von dem Haltemittel 21.1 gehalten ist. Das Fixierelement 5 weist eine erste Fixierelementbohrung 5.1 sowie eine zweite Fixierelementbohrung 5.2 auf. Die Fixierelementbohrungen 5.1 und 5.2 sind vorteilhaft fluchtend zueinander ausgebildet. Ebenfalls sind vorteilhaft die Außenwellenbohrungen 3.2 und 3.3 fluchtend zueinander ausgebildet. Beim Vorpositionieren der Innenwelle 4 innerhalb der Durchgangsbohrung 3.1 in der Außenwelle 3 wird die Innenwelle 4 vorteilhaft derart in der Durchgangsbohrung 3.1 angeordnet, dass sich die Innenwellenbohrung 4.1 ausgehend von einer der Außenwellenbohrungen 3.2 bzw. 3.3 zu einer anderen der Außenwellenbohrungen 3.3 bzw. 3.2 der Außenwelle 3 erstreckt. Vorteilhaft wird das Fixierelement 5 derart an der Außenwelle 3 angeordnet, dass eine der Fixierelementbohrungen 5.1 bzw. 5.2 kongruent zu einer der Außenwellenbohrungen 3.2 bzw. 3.3 ausgerichtet ist. Vorteilhaft wird die gesamte Nockenwelle 1 derart in die Vorrichtung 20 eingelegt bzw. von der Vorrichtung 20 gegriffen, dass die Bohrungen, wie die Fixierelementbohrungen 5.1 bzw. 5.2, die Außenwellenbohrung 3.2 bzw. 3.3 sowie die Innenwellenbohrung 4.1 fluchtend zur Ausnehmung 21.2 der Vorrichtung 20 bzw. des ersten Anordnungssegment 21 der Vorrichtung 20 angeordnet zw. Ausgerichtet sind.

Es ist denkbar, dass die Bohrungen, insbesondere die Innenwellenbohrung 4.1 und/oder die Außenwellenbohrung 3.2 bzw. 3.3 und/oder die Fixierelementbohrungen 5.1 bzw. 5.2 Einführschrägen bzw. Fasen aufweisen, um das Einführen eines, wie in der Figur 2 gezeigten Ausrichtungselementes 30 und/oder eines, wie in der Figur 3 gezeigten Positionierelementes 10 in die Nockenwelle 1 bzw. in das Wellensegment 2 zu erleichtern.

In der Figur 2 ist in einer Querschnittsdarstellung die in der Figur 1 gezeigte Ausführungsform einer verstellbaren Nockenwelle 1, während des Einbringens eines Ausrichtungselementes 30 gezeigt. Das Ausrichtungselement 30, welches vorteilhaft in Form eines Stiftelementes vorliegt, wird in einer Einschubrichtung E in das Wellensegment 2, insbesondere in die Nockenwelle 1 eingebracht. Hierbei wird das Ausrichtungselement 30 ausgehend von einer ersten Fixierelementbohrung 5.1, wie in der Figur 1 gezeigt, zumindest durch eine erste Außenwellenbohrung 3.2 der Außenwelle 3 in die Innenwellenbohrung 4.1 der Innenwelle 4 eingeschoben. Es ist des Weiteren denkbar, dass das Ausrichtungselement 30 derart weit in das Wellensegment 2 bzw. die Nockenwelle 1 eingeschoben wird, dass dieses auch die zweite Außenwellenbohrung 3.3 und vorteilhaft auch die zweite Fixierelementbohrung 5.2 des Fixierelementes 5 zumindest abschnittsweise durchdringt.

In der Figur 3 ist in einer Querschnittsdarstellung die in den Figuren 1 und 2 gezeigte Ausführungsform der verstellbaren Nockenwelle 1 während des Montageprozesses des Einbringens eines Positionierelementes 10 gezeigt. Das Positionierelement 10 wird vorteilhaft in Einschubrichtung E in die Nockenwelle 1 bzw. das Wellensegment 2 eingeschoben. Hierfür ist es erforderlich, dass das in der Figur 2 gezeigte Ausrichtungselement 30 wieder aus der Nockenwelle 1 bzw. dem Wellensegment 2 hinaus bewegt bzw. gezogen wurde. Das Hinausziehen des in der Figur 2 gezeigten Ausrichtungselementes 30 erfolgt vorteilhaft entgegen der Einschubrichtung E. Das Positionierelement 10 wird vorteilhaft derart weit in die Nockenwelle 1 bzw. das Wellensegment 2 hineingeschoben, dass dieses die Ausnehmung 21.2 des ersten Anordnungssegmentes 21 der Vorrichtung 20 kontaktiert. Die Ausnehmung 21.2 weist vorteilhaft eine Tiefe auf, welche im Wesentlichen der Größe des halben maximal möglichen Spiels, welches zwischen der Innenwelle und der Außenwelle besteht, aufweist. Demzufolge wird das Positionierelement 10 vorteilhaft derart weit durch das Wellensegment 2 bzw. die Nockenwelle 1 hindurch geschoben, dass dieses um die Größe des halben maximal möglichen Spiels aus dem Wellensegment 2 bzw. der Nockenwelle 1 hinausragt.

In der Figur 4 ist in einer Querschnittsdarstellung die in den Figuren 1 bis 3 gezeigte Ausführungsform einer verstellbaren Nockenwelle 1 während des Montageschrittes des Endpositionierens der Innenwelle 4 gezeigt. Hierfür ist die Nockenwelle 1 bzw. das Wellensegment 2 um 180° um deren zentrische Drehachse gedreht, sodass das Wellensegment 2 bzw. die Nockenwelle 1 mit derjenigen Seite in einem Auflagesegment 23 der Vorrichtung 20 aufgenommen werden kann, welche der Seite entspricht, in der das Positionierelement 10 in die Nockenwelle 1 bzw. das Wellensegment 2 eingeschoben wurde. Das Auflagesegment 23 ist entweder vorteilhaft ein eigenständiges Element der Vorrichtung 20 bzw. des Werkzeugs 20 zur Montage einer verstellbaren Nockenwelle 1 oder ein Bestandteil des zweiten Anordnungssegmentes 22. Das zweite Anordnungssegment 22 weist ein Kontaktierungsmittel 22.2 sowie ein Haltemittel 22.1 auf. In der Figur 4 ist eine Ausführungsform des zweiten Anordnungssegmentes 22 gezeigt, bei welchem das Haltemittel 22.1 und das Kontaktierungsmittel 22.2 übergangslos in Gestalt einer Ausnehmung ausgeführt sind. Die Ausnehmung weist vorteilhaft eine geometrische Gestalt vergleichbar zum Außenumfang des Fixierelementes 5, insbesondere der Nockenwelle1, welche das Fixierelement 5 umfasst, auf, um dieses zumindest teilweise zu kontaktieren bzw. zu umschließen. Es ist jedoch auch denkbar, dass das Haltemittel 22.1 in Form von Haltenasen, Haltestegen oder vergleichbaren Haltemitteln ausgestaltet ist, während das Kontaktierungsmittel 22.2 beispielsweise in Gestalt eines Vorsprunges oder einer Materialhärtung oder Oberflächenaufrauhung etc. ausgebildet ist. Mittels dem Kontaktierungsmittel 22.2. des zweiten Anordnungssegmentes 22 ist es möglich das Positionierelement 10 entgegen der Einschubrichtung E in das Wellensegment 2, insbesondere in die Nockenwelle 1 um vorteilhaft das halbe maximal mögliche Spiel, insbesondere jedoch um diejenige Länge zurück zu schieben, mit welcher es aus dem Wellensegment 2, insbesondere der Nockenwelle 1 hervor steht. Hierfür wird das zweite Anordnungssegment 22 entgegen der Einschubrichtung E auf das Wellensegment 2, insbesondere die Nockenwelle 1 derart aufgebracht, dass das Kontaktierungsmittel 22.2 das aus dem Wellensegment 2 bzw. der Nockenwelle 1 hervorstehende Ende des Positionierelementes 10 kontaktiert. Bei Aufbringen einer entsprechenden Druckkraft, wird mittels des Kontaktierungsmittels 22.2 des zweiten Anordnungssegmentes 22 ein Zurückschieben bzw. ein Bewegen des Positionierelementes 10 entgegen der Einschubrichtung E ermöglicht.

In der Figur 5 ist die Endpositionierung der Innenwelle 4 innerhalb der Durchgangsbohrung 3.1 der Außenwelle 3 gezeigt. Hierbei ist die Innenwelle 4 konzentrisch zur Außenwelle 3 und vorteilhaft auch konzentrisch zum Fixierelement 5 angeordnet. Das Positionierelement 10 ist vorteilhaft vollständig innerhalb der Nockenwelle 1 angeordnet. Demzufolge ragt das Positionierelement 10 vorteilhaft auf keiner der Seiten mehr aus dem Wellensegment 2 bzw. der Nockenwelle 1 hervor.

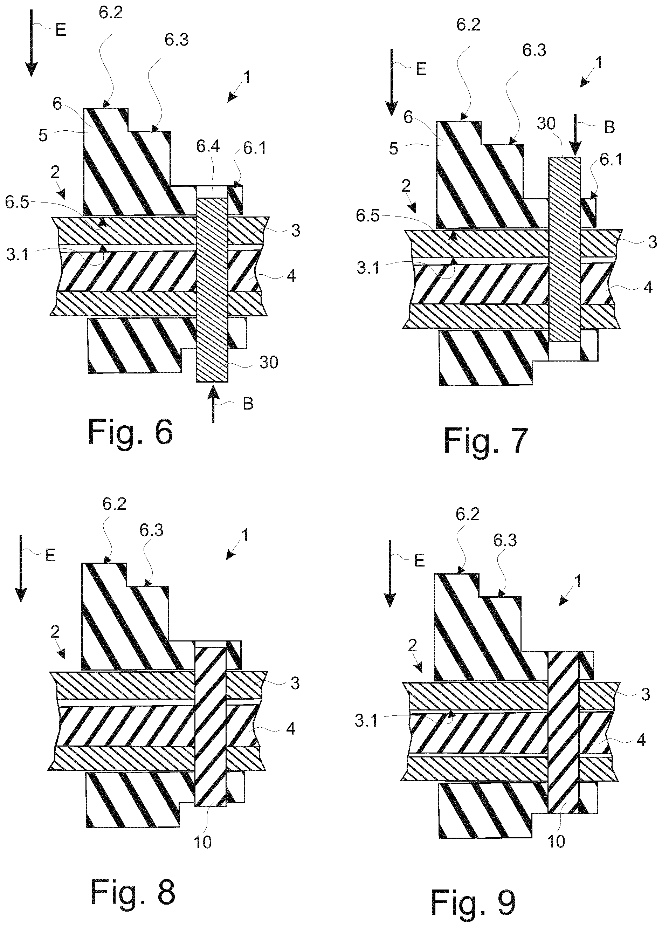

In der Figur 6 ist in einer seitlichen Schnittdarstellung ein Ausschnitt einer weiteren Ausführungsform einer verstellbaren Nockenwelle 1 gezeigt. Die verstellbaren Nockenwelle 1 weist neben der Außenwelle 3 und der Innenwelle 4 ein Fixierelement 5 in Gestalt eines Bundnockens 6 bzw. eines Bundnockenelementes 6 auf, Das Bundnockenelement 6 weist einen Nockenbund 6.1 und zwei Nockenbahnen, nämlich eine erste Nockenbahn 6.2 sowie eine zweite Nockenbahn 6.3 auf. Eine Bundnockenbohrung 6.4 erstreckt sich durch den Nockenbund 6.1. Vorteilhaft ist die Bundnockenbohrung 6.4 bei dem Vorgang der Vorpositionierung der Innenwelle 4 fluchtend zu der hier nicht dargestellten Außenwellenbohrung angeordnet. Bei dem in der Figur 6 gezeigten Montageschritt wird ein Ausrichtungselement 30 entgegen der Einschubrichtung E in Bewegungsrichtung B in die Nockenwelle 1 eingeschoben. Dabei durchtritt das Ausrichtungselement 30 das Bundnockenelement 6 sowie das Wellensegment 2 der Nockenwelle 1 durch die vorteilhaft fluchtend zueinander ausgerichteten Bohrungen der einzelnen Elemente bzw. Segmente.

Wie in der Figur 7 gezeigt, ist es auch denkbar, dass das Ausrichtungselement 30 in einer Bewegungsrichtung B bewegt wird, welcher der Einschubrichtung E entspricht. Das bedeutet, dass das Ausrichtungselement 30 in Einschubrichtung E in die Nockenwelle 1 und insbesondere in das Wellensegment 2 der Nockenwelle 1 durch die entsprechenden Bohrungen eingeschoben bzw. eingebracht wird, um ein Ausrichten des Fixierelementes 5 bzw. des als Bundnockenelement 6 ausgebildeten Fixierelementes 5 zur Außenwelle 3 und zur Innenwelle 4 zu ermöglichen. Vorteilhaft entspricht die Ausführungsform des Nockenelementes 1 der Figur 7 der in der Figur 6 gezeigten Ausführungsform der Nockenwelle 1, sodass hinsichtlich der Ausgestaltung der Nockenwelle 1 auf die Beschreibung der Figur 6 verwiesen wird.

In der Figur 8 ist in einer seitlichen Schnittdarstellung ein Ausschnitt der in den Figuren 6 und 7 gezeigten Ausführungsform einer verstellbaren Nockenwelle 1 dargestellt. In der Figur 8 ist anstelle eines Ausrichtungselementes 30 ein Positionierelement 10 in die Bohrungen der Nockenwelle 1, insbesondere die Bohrungen des Bundnockenelemente 6, der Außenwelle 3 und der Innenwelle 4 eingebracht. Das Positionierelement 10 ist vorteilhaft in Einschubrichtung E durch die Bohrungen der Nockenwelle 1 derart weit hindurchgeschoben wurden, dass es zumindest auf einer Seite der Nockenwelle 1 aus dieser heraustritt bzw. hervor steht. Die Innenwelle 4 ist in diesem Verfahrensschritt zur Montage einer verstellbaren Nockenwelle 1 noch exzentrisch zur Außenwelle 3 angeordnet. Die Positionierung der Innenwelle 4 erfolgt in einem weiteren, nachfolgenden Montageschritt, bei welchem die Innenwelle 4 konzentrisch zur Außenwelle 3 ausgerichtet wird. Dies ist insbesondere in der Figur 9 dargestellt.

Gemäß der Darstellung der Figur 9 wurde das Positionierelement 10 entgegen der Einschubrichtung E um den Betrag zurück bewegt, um welchen das Positionierelement 10 aus der Nockenwelle 1 herausragt. Vorteilhaft entspricht dies der Größe des halben maximal möglichen Spiels. Durch ein Zurückbewegen des Positionierelementes 10 entgegen der Einschubrichtung E wird aufgrund der bestehenden Haftreibungskraft zwischen der äußeren Oberfläche des vorteilhaft als Stiftelementes ausgebildeten Positionierelementes 10 und der Oberfläche der Innenwellenbohrung 4.1 (nicht gezeigt) der Innenwelle 4 ein Mitbewegen der Innenwelle 4 entgegen der Einschubrichtung E ebenfalls um vorteilhaft das halbe maximal mögliche Spiel gestattet. Nach der erfolgten Endpositionierung der Innenwelle 4 innerhalb der Außenwelle 3 liegt vorteilhaft auch das Positionierelement 10 derart innerhalb des Wellensegmentes 10 bzw. innerhalb der Nockenwelle 1, dass es auf keiner der Seiten herausragt bzw. hervor steht.

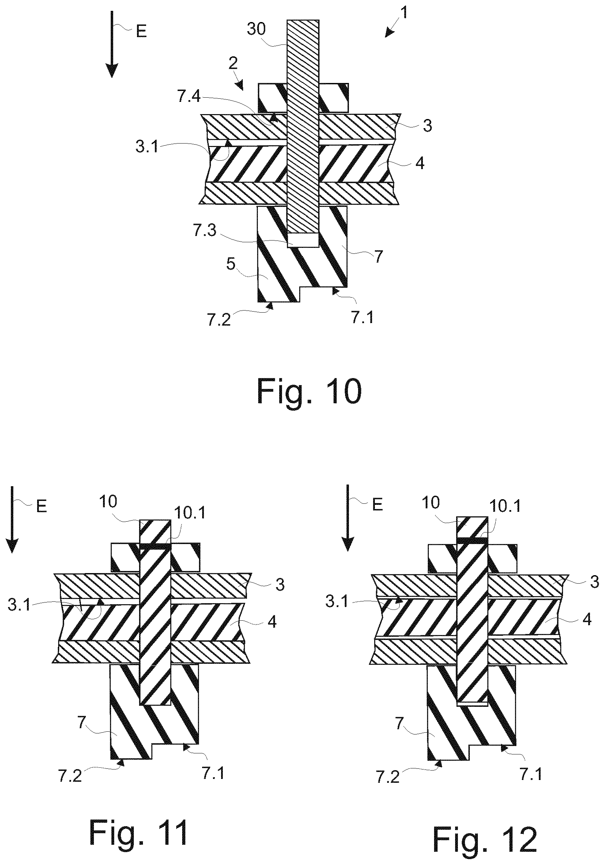

In den Figuren 10 bis 12 ist in einer seitlichen Schnittdarstellung ein Ausschnitt einer weiteren Ausführungsform einer verstellbaren Nockenwelle 1 gezeigt. Die verstellbaren Nockenwelle 1 weist im Gegensatz zu der in den Figuren 6 bis 9 gezeigten Ausführungsform einer verstellbaren Nockenwelle 1 kein Bundnockenelement 6, sondern ein einfaches Nockenelemente 7 auf, welches folglich unter anderem als Fixierelement 5 dient. Das Nockenelement 7 weist eine erste Nockenbahn 7.1 und eine zweite Nockenbahn 7.2 auf. Eine Nockenelementbohrung 7.3 erstreckt sich zumindest abschnittsweise in dem Nockenelement 7. In der Figur 10 ist in einem ersten Montageschritt zur Herstellung einer verstellbaren Nockenwelle 1 das Einbringen eines Ausrichtungselementes 30 gezeigt, welches sich durch die Nockenelementbohrung 7.3 sowie die hier nicht gezeigte Außenwellenbohrung 3.2 und 3.3 sowie die Innenwellenbohrung 4.1 (hier nicht gezeigt) erstreckt. Die Bewegungsrichtung B des Ausrichtungselementes 30 entspricht hierbei der Einschubrichtung E. Vorteilhaft wird das Ausrichtungselement 30 durch alle Bohrungen der Nockenwelle 1 hindurchgeführt, um ein Ausrichten des Nockenelementes 7 relativ zur Außenwelle 3 sowie relativ zur Innenwelle 4 bzw. ein Ausrichten der einzelnen Elemente zueinander zu ermöglichen. Nachdem das Ausrichtungselement 30 entgegen der Einschubrichtung E aus dem Nockenelement 1 hinaus bewegt wurde, wird ein Positionierelement 10 in Einschubrichtung E in die zueinander fluchtend ausgerichteten Bohrungen des Nockenelementes 7, der Außenwelle 3 und der Innenwelle 4 in Einschubrichtung E eingebracht. Dies ist insbesondere in der Figur 11 gezeigt. Vorteilhaft wird das Positionierelement 10 hierbei durch das Wellensegment 2 hindurch zumindest abschnittsweise in die Nockenelementbohrung 7.3 hinein geschoben. Vorteilhaft wird das Positionierelement 10 derart weit in die Nockenelementbohrung 7.3 hinein geschoben, bis ein erstes distales Ende 10.1 des Positionierelementes 10 eine Stirnwandung der als Sacklochbohrung ausgestalteten Nockenelementbohrung 7.3 kontaktiert.

Zur Endpositionierung der Innenwelle 4 wird, wie in der Figur 12 gezeigt, das Positionierelement 10 entgegen der Einschubrichtung E, vorteilhaft um die Größe des halben maximal möglichen Spiels bewegt, sodass die Innenwelle 4 aufgrund der zwischen der äußeren Oberfläche des Positionierelementes 10 und der Oberfläche der Innenwellenbohrung der Innenwelle 4 bestehenden Haftreibungskraft ebenfalls entgegen der Einschubrichtung E bewegt wird. Wie in der Figur 12 gezeigt, befindet sich ein zweites distales Ende 10.2 des Positionierelementes 10 außerhalb der Nockenwelle 1 und steht folglich aus der Nockenwelle 1 hervor. Um dieses überstehende Positionierelementstück zu entfernen, dient eine Sollbruchstelle 11. Mit Hilfe dieser Sollbruchstelle wird vorteilhaft das Entfernen des überstehenden distalen Endes 10.2 des Positionierelementes 10 erleichtert. Vorteilhaft dient die Sollbruchstelle 11 ebenfalls zur Kennzeichnung des Positionierelementes 10 hinsichtlich der aus der Nockenwelle 1 bzw. dem Wellensegment 2 herauszuziehenden Abschnittes bzw. Bereiches des Positionierelementes 10. Das bedeutet, dass die Sollbruchstelle 11 auch als Markierung dient.

### Bezugszeichenliste

- 1: Nockenwelle
- 2: Wellensegment
- 3: Außenwelle
- 3.1: Durchgangsbohrung der Außenwelle
- 3.2: (erste) Außenwellenbohrung
- 3.3: (zweite) Außenwellenbohrung
- 4: Innenwelle
- 4.1: Innenwellenbohrung
- 5: Fixierelement
- 5.1: (erste) Fixierelementbohrung
- 5.2: (zweite) Fixierelementbohrung
- 6: Bundnockenelement
- 6.1: Nockenbund
- 6.2: erste Nockenbahn
- 6.3: zweite Nockenbahn
- 6.4: Bundnockenbohrung
- 7: Nockenelement
- 7.1: erste Nockenbahn
- 7.2: zweite Nockenbahn
- 7.3: Nockenelementbohrung

- 10: Positionierelement
- 10.1: erstes distales Ende des Positionierelementes
- 10.2: zweites distales des Positionierelementes
- 20: Vorrichtung/Werkzeug
- 21: erstes Anordnungssegment
- 21.1: Haltemittel
- 21.2: Ausnehmung
- 22: zweites Anordnungssegment
- 22.1: Haltemittel
- 22.2: Kontaktierungsmittel
- 23: Auflagesegment

- B: Bewegungsrichtung
- E: Einschubrichtung

## Patentansprüche

1. Verfahren zur Montage einer verstellbaren Nockenwelle (1), welche zumindest ein Wellensegment (2) aufweisend eine Außenwelle (3) und eine sich konzentrisch durch eine Durchgangsbohrung (3.1) der Außenwelle (3) erstreckende Innenwelle (4) aufweist, mit wenigstens den Schritten:
- Vorpositionieren der Innenwelle (4), wobei die Innenwelle (4) zumindest abschnittsweise exzentrisch in die Durchgangsbohrung (3.1) der Außenwelle (3) eingebracht wird,
- Einschieben eines Positionierelementes (10) in einer Einschubrichtung (E) durch eine erste in einer Umfangswandung der Außenwelle (3) gebildeten Außenwellenbohrung (3.2, 3.3), eine sich orthogonal zur Längsachse der Innenwelle (4) erstreckende Innenwellenbohrung (4.1) und eine zweite in einer Umfangswandung der Außenwelle (3) gebildeten Außenwellenbohrung (3.2, 3.3) derart, dass das Positionierelement (10) aus der zweiten Außenwellenbohrung (3.2, 3.3) hinausragt,
- Endpositionieren der Innenwelle (4), wobei das Positionierelement (10) derart entgegen der Einschubrichtung (E) bewegt wird, dass die Innenwelle (4) sich konzentrisch innerhalb der Durchgangsbohrung (3.1) der Außenwelle (3) ausrichtet.

2. Verfahren gemäß Anspruch 1,
**dadurch gekennzeichnet, dass**
das Positionierelement (10) um wenigstens die Größe eines halben maximal möglichen Spiels in Einschubrichtung (E) zumindest aus dem Wellensegment (2) hinausgeschoben wird.

3. Verfahren gemäß einem der Ansprüche 1 oder 2,
**dadurch gekennzeichnet, dass**
das Positionierelement (10) um weniger als die Größe des halben maximal möglichen Spiels, um mehr als die Größe des halben maximal möglichen Spiels oder um genau die Größe des halben maximal möglichen Spiels entgegen der Einschubrichtung (E) zumindest in das Wellensegment (2) hinein bewegt wird.

4. Verfahren gemäß einem der vorangegangenen Ansprüche,
**dadurch gekennzeichnet, dass**
ein Ausrichtelement (30) vor dem Einschieben des Positionierelementes (10) in der Einschubrichtung (E) zumindest durch die erste Außenwellenbohrung (3.2) und die Innenwellenbohrung (4.1) wenigstens zur Ausrichtung der ersten Außenwellenbohrung (3.2) zur Innenwellenbohrung (4.1) eingeschoben wird.

5. Verfahren gemäß Anspruch 4,
**dadurch gekennzeichnet, dass**
das Ausrichtelement (30) zudem zumindest teilweise in die zweite Außenwellenbohrung (3.3) eingeschoben wird.

6. Verfahren gemäß einem der Ansprüche 1 bis 3,
**dadurch gekennzeichnet, dass**
ein Ausrichtelement (30) vor dem Einschieben des Positionierelementes (10) entgegen der Einschubrichtung (E) zumindest durch die zweite Außenwellenbohrung (3.3) und die Innenwellenbohrung (4.1) wenigstens zur Ausrichtung der zweiten Außenwellenbohrung (3.3) zur Innenwellenbohrung (4.1) eingeschoben wird.

7. Verfahren gemäß Anspruch 6,
**dadurch gekennzeichnet, dass**
das Ausrichtelement (30) zudem zumindest teilweise in die erste Außenwellenbohrung (3.2) eingeschoben wird.

8. Verfahren gemäß einem der vorangegangenen Ansprüche,
**dadurch gekennzeichnet, dass**
das Ausrichtelement (30) entgegen der Einschubrichtung (E) aus dem Wellensegment (2) bewegt wird.

9. Verfahren gemäß einem der Ansprüche 1 bis 7,
**dadurch gekennzeichnet, dass**
das Ausrichtelement (30) in Einschubrichtung (E) aus dem Wellensegment (2) bewegt wird.

10. Verfahren gemäß einem der vorangegangenen Ansprüche,
**dadurch gekennzeichnet, dass**
ein Fixierelement (5) derart an der Außenwelle (3) angeordnet wird, dass zumindest eine sich durch eine Umfangswandung des Fixierelementes (5) erstreckende Fixierelementbohrung (5.1, 5.2) fluchtend zu wenigstens einer Außenwellenbohrung (3.2, 3.3) angeordnet wird.

11. Vorrichtung (20) zur Montage einer verstellbaren Nockenwelle (1) aufweisend zumindest ein Wellensegment (2), wobei das Wellensegment (2) eine Außenwelle (3) und eine sich konzentrisch durch eine Durchgangsbohrung (3.1) der Außenwelle (3) erstreckende Innenwelle (4) aufweist, wobei die Vorrichtung (20) zumindest ein
erstes Anordnungssegment (21) zur Vorpositionierung der Innenwelle (4) innerhalb der Durchgangsbohrung (3.1) der Außenwelle (3) derart, dass die Innenwelle (4) exzentrisch zur Außenwelle (3) angeordnet ist, und
ein zweites Anordnungssegment (22) zur Endpositionierung der Innenwelle (4) innerhalb der Durchgangsbohrung (3.1) der Außenwelle (3) derart, dass die Innenwelle (4) konzentrisch zur Außenwelle (3) angeordnet ist, aufweist, wobei das erste Anordnungssegment (21) und das zweite Anordnungssegment (22) jeweils zumindest ein Haltemittel (21.1, 22.1) aufweisen, welche zumindest die Außenwelle (3) oder ein auf der Außenwelle anordenbares Fixierelement (5) positionieren, und wobei
das erste Anordnungssegment (21) eine Aussparung (21.2) zur Aufnahme eines wenigstens aus dem Wellensegment (2) herausragenden Abschnittes eines Positionierelementes (10), welches zumindest abschnittsweise durch das Wellensegment (2) hindurch geschobenen ist, aufweist,
und das zweite Anordnungssegment (22) ein Kontaktierungsmittel (22.2) zum Einschieben des Positionierelementes (10) zumindest in das Wellensegment (2) aufweist.

## Claims

1. Method for assembling an adjustable camshaft (1) which comprises at least one shaft segment (2) having an outer shaft (3) and an inner shaft (4) which extends concentrically through a through-hole (3.1) of the outer shaft (3) having at least the steps:
- prepositioning the inner shaft (4), wherein the inner shaft (4) is at least partially introduced eccentrically into the through-hole (3.1) of the outer shaft (3),
- introducing a positioning element (10) in an introduction direction (E) through a first outer shaft hole (3.2, 3.3) which is formed in a peripheral wall of the outer shaft (3), an inner shaft hole (4.1) which extends orthogonally to the longitudinal axis of the inner shaft (4) and a second outer shaft hole (3.2, 3.3) which is formed in a peripheral wall of the outer shaft (3) in such a manner that the positioning element (10) projects out of the second outer shaft hole (3.2, 3.3),
- final positioning of the inner shaft (4), wherein the positioning element (10) is moved counter to the introduction direction (E) in such a manner that the inner shaft (4) is orientated concentrically inside the through-hole (3.1) of the outer shaft (3).

2. Method according to Claim 1,
**characterized in that**
the positioning element (10) is at least pushed out of the shaft segment (2) at least by the magnitude of half of the maximum possible play in the introduction direction (E).

3. Method according to either of Claims 1 and 2,
**characterized in that**
the positioning element (10) is at least moved into the shaft segment (2) by less than the magnitude of half of the maximum possible play, by more than the magnitude of half of the maximum possible play or by precisely the magnitude of half of the maximum possible play counter to the introduction direction (E).

4. Method according to one of the preceding claims,
**characterized in that**
an orientation element (30) is introduced, before the positioning element (10) is introduced, in the introduction direction (E) at least through the first outer shaft hole (3.2) and the inner shaft hole (4.1) at least for the orientation of the first outer shaft hole (3.2) relative to the inner shaft hole (4.1).

5. Method according to Claim 4,
**characterized in that**
the orientation element (30) is further introduced at least partially into the second outer shaft hole (3.3).

6. Method according to one of Claims 1 to 3,
**characterized in that**
an orientation element (30), before the positioning element (10) is introduced, is introduced counter to the introduction direction (E) at least through the second outer shaft hole (3.3) and the inner shaft hole (4.1) at least for the orientation of the second outer shaft hole (3.3) relative to the inner shaft hole (4.1) .

7. Method according to Claim 6,
**characterized in that**
the orientation element (30) is further introduced at least partially into the first outer shaft hole (3.2).

8. Method according to one of the preceding claims,
**characterized in that**
the orientation element (30) is moved counter to the introduction direction (E) out of the shaft segment (2) .

9. Method according to one of Claims 1 to 7,
**characterized in that**
the orientation element (30) is moved in the introduction direction (E) out of the shaft segment (2) .

10. Method according to one of the preceding claims,
**characterized in that**
a fixing element (5) is arranged on the outer shaft (3) in such a manner that at least one fixing element hole (5.1, 5.2) which extends through a peripheral wall of the fixing element (5) is arranged in alignment with at least one outer shaft hole (3.2, 3.3).

11. Device (20) for assembling an adjustable camshaft (1) having at least one shaft segment (2), wherein the shaft segment (2) comprises an outer shaft (3) and an inner shaft (4) which extends concentrically through a through-hole (3.1) of the outer shaft (3), wherein the device (20) comprises at least
a first arrangement segment (21) for prepositioning the inner shaft (4) inside the through-hole (3.1) of the outer shaft (3) in such a manner that the inner shaft (4) is arranged eccentrically relative to the outer shaft (3) and
a second arrangement segment (22) for finally positioning the inner shaft (4) inside the through-hole (3.1) of the outer shaft (3) in such a manner that the inner shaft (4) is arranged concentrically relative to the outer shaft (3),
wherein the first arrangement segment (21) and the second arrangement segment (22) each comprise at least one retention means (21.1, 22.1) which at least position the outer shaft (3) or a fixing element (5) which can be arranged on the outer shaft, and wherein the first arrangement segment (21) comprises a recess (21.2) for receiving a portion of a positioning element (10) projecting at least out of the shaft segment (2), which positioning element is at least partially pushed through the shaft segment (2),
and the second arrangement segment (22) comprises a contacting means (22.2) for introducing the positioning element (10) at least into the shaft segment (2).

## Revendications

1. Procédé de montage d'un arbre à cames réglable (1), lequel comprend au moins un segment d'arbre (2) comprenant un arbre extérieur (3) et un arbre intérieur (4) s'étendant concentriquement à travers un alésage traversant (3.1) de l'arbre extérieur (3), le procédé comprenant au moins les étapes suivantes :
- pré-positionnement de l'arbre intérieur (4), l'arbre intérieur (4) étant introduit au moins dans certaines régions de manière excentrique dans l'alésage traversant (3.1) de l'arbre extérieur (3),
- insertion d'un élément de positionnement (10) dans un sens d'insertion (E) à travers un premier alésage d'arbre extérieur (3.2, 3.3) formé dans une paroi périphérique de l'arbre extérieur (3), un alésage d'arbre intérieur (4.1) s'étendant perpendiculairement à l'axe longitudinal de l'arbre intérieur (4) et un deuxième alésage d'arbre extérieur (3.2, 3.3) formé dans une paroi périphérique de l'arbre extérieur (3), de telle sorte que l'élément de positionnement (10) fasse saillie hors du deuxième alésage d'arbre extérieur (3.2, 3.3),
- positionnement final de l'arbre intérieur (4), l'élément de positionnement (10) étant déplacé en sens inverse au sens d'insertion (E), de telle sorte que l'arbre intérieur (4) soit orienté concentriquement à l'intérieur de l'alésage traversant (3.1) de l'arbre extérieur (3).

2. Procédé selon la revendication 1,
**caractérisé en ce que**
l'élément de positionnement (10) est repoussé au moins hors du segment d'arbre (2) au moins de la grandeur d'une moitié de jeu maximal possible dans le sens d'insertion (E) .

3. Procédé selon la revendication 1 ou 2,
**caractérisé en ce que**
l'élément de positionnement (10) est déplacé au moins à l'intérieur du segment d'arbre (2) de moins de la grandeur de la moitié du jeu maximal possible, de plus de la grandeur de la moitié du jeu maximal possible ou d'exactement la grandeur de la moitié du jeu maximal possible en sens inverse au sens d'insertion (E).

4. Procédé selon l'une des revendications précédentes,
**caractérisé en ce**
**qu'**un élément d'orientation (30) est inséré, avant l'insertion de l'élément de positionnement (10) dans le sens d'insertion (E), au moins à travers le premier alésage d'arbre extérieur (3.2) et l'alésage d'arbre intérieur (4.1) au moins pour l'orientation du premier alésage d'arbre extérieur (3.2) par rapport à l'alésage d'arbre intérieur (4.1).

5. Procédé selon la revendication 4,
**caractérisé en ce que**
l'élément d'orientation (30) est en outre inséré au moins partiellement dans le deuxième alésage d'arbre extérieur (3.3) .

6. Procédé selon l'une des revendications 1 à 3,
**caractérisé en ce**
**qu'**un élément d'orientation (30) est inséré, avant l'insertion de l'élément de positionnement (10) en sens inverse au sens d'insertion (E), au moins à travers le deuxième alésage d'arbre extérieur (3.3) et l'alésage d'arbre intérieur (4.1) au moins pour l'orientation du deuxième alésage d'arbre extérieur (3.3) par rapport à l'alésage d'arbre intérieur (4.1).

7. Procédé selon la revendication 6,
**caractérisé en ce que**
l'élément d'orientation (30) est en outre inséré au moins partiellement dans le premier alésage d'arbre extérieur (3.2) .

8. Procédé selon l'une des revendications précédentes,
**caractérisé en ce que**
l'élément d'orientation (30) est déplacé hors du segment d'arbre (2) en sens inverse au sens d'insertion (E).

9. Procédé selon l'une des revendications 1 à 7,
**caractérisé en ce que**
l'élément d'orientation (30) est déplacé hors du segment d'arbre (2) dans le sens d'insertion (E).

10. Procédé selon l'une des revendications précédentes,
**caractérisé en ce**
**qu'**un élément de fixation (5) est disposé sur l'arbre extérieur (3) de telle sorte qu'au moins un alésage d'élément de fixation (5.1, 5.2) s'étendant à travers une paroi périphérique de l'élément de fixation (5) soit disposé en alignement par rapport à au moins un alésage d'arbre extérieur (3.2, 3.3).

11. Dispositif (20) de montage d'un arbre à cames réglable (1) comprenant au moins un segment d'arbre (2), dans lequel le segment d'arbre (2) comprend un arbre extérieur (3) et un arbre intérieur (4) s'étendant concentriquement à travers un alésage traversant (3.1) de l'arbre extérieur (3), dans lequel le dispositif (20) comprend au moins
un premier segment d'agencement (21) pour le pré-positionnement de l'arbre intérieur (4) à l'intérieur de l'alésage traversant (3.1) de l'arbre extérieur (3), de telle sorte que l'arbre intérieur (4) soit disposé de manière excentrique par rapport à l'arbre extérieur (3), et
un deuxième segment d'agencement (22) pour le positionnement final de l'arbre intérieur (4) à l'intérieur de l'alésage traversant (3.1) de l'arbre extérieur (3), de telle sorte que l'arbre intérieur (4) soit disposé concentriquement par rapport à l'arbre extérieur (3),
dans lequel le premier segment d'agencement (21) et le deuxième segment d'agencement (22) comprennent respectivement au moins un moyen de retenue (21.1, 22.1), lesquels positionnent au moins l'arbre extérieur (3) ou un élément de fixation (5) pouvant être disposé sur l'arbre extérieur, et dans lequel
le premier segment d'agencement (21) comprend un évidement (21.2) destiné à recevoir une partie d'un élément de positionnement (10) faisant saillie au moins hors du segment d'arbre (2), lequel élément de positionnement est poussé au moins dans certaines régions à travers le segment d'arbre (2),
et le deuxième segment d'agencement (22) comprend un moyen de mise en contact (22.2) pour l'insertion de l'élément de positionnement (10) au moins dans le segment d'arbre (2).
